# EUROPEAN PATENT SPECIFICATION

(11) **EP 4 082 349 B1**
(45) Date of publication and mention of the grant of the patent: **18.12.2024**
(21) Application number: 22171100.5
(22) Date of filing: 02.05.2022
(51) Int. Cl.: A23B 4/16, A23B 4/005, A23L 3/3418, A23L 17/40, A23L 17/50

(54) **METHOD FOR PRESERVING SHELLFISH AND/OR CRUSTACEANS.**
VERFAHREN ZUR KONSERVIERUNG VON SCHALEN- UND/ODER KRUSTENTIEREN
PROCÉDÉ DE PRÉSERVATION DES COQUILLAGES ET/OU CRUSTACÉS.

(30) Priority: 30.04.2021 NL 2028106
(43) Date of publication of application: 02.11.2022
(73) Proprietor: Meromar Holding B.V., 8861 NE Harlingen (NL)
(72) Inventor: SEINEN, Arend André, Harlingen (NL)
(74) Representative: Algemeen Octrooi- en Merkenbureau B.V.

(56) References cited:
- EP-A1- 0 721 743
- EP-A1- 1 679 004
- EP-B1- 0 440 601
- WO-A1-90/03737
- US-A1- 2006 222 747

## Description

The invention relates to a new method for preserving boiled shellfish and/or crustaceans in a packaging, comprising the following steps:
- packaging the shellfish and/or crustaceans in a packaging under a protective atmosphere;
- closing/sealing the packaging;
- heating the closed/sealed packaging containing the shellfish and/or crustaceans,
- wherein heating of the packaging is carried out in an autoclave,
- wherein heating of the closed/sealed packaging is carried out at an overpressure in the range from 0.1 - 3.0 bar(g), as claimed.

The object of the new method is to keep the shellfish and/or crustaceans in the packaging fresh and stable for longer without deteriorating and without the need to add preservatives or to freeze or refrigerate the shellfish and/or crustaceans.

The new method for preserving shellfish and/or crustaceans ensures the preservation of the natural characteristics or organoleptic properties of shellfish and/or crustaceans, perceived by the human senses, such as the flavour, smell, appearance and texture of shellfish and/or crustaceans during an extended storage life.

Because the quality of in particular crustaceans deteriorates quickly, these animals are often boiled shortly after they have been caught, for example on the fishing boat or in a processing plant in a fishing port. Shellfish are often boiled on shore. The shrimp (variety *Crangon crangon* from the *Crangonidae* family of the *Caridea* infraorder) is a known example of a crustacean with a large worldwide market. Before it can be consumed, the shrimp has to be peeled; the protective shell has to be removed. The best quality on the table of the consumer can only be ensured by peeling the shrimps just before consumption. However, the bulk of the caught shrimps are offered to consumers in a peeled state. To this end, the boiled unpeeled shrimps are transported to shrimp peelers charging a low hourly wage, and then the shrimps which have been peeled at low cost are preserved in a traditional manner using citric acid and benzoic acid, and the shrimps are transported again and only thereafter are they packaged and sold for consumption.

Due to the long journey times to and from the shrimp peelers, it is necessary not only to boil the unpeeled shrimps, but also to add all kinds of preservatives to the unpeeled and peeled shrimps in order to prevent the growth of microorganisms, such as Listeria and Salmonella, and to keep the bacteria count in the crustaceans and shellfish low.

Known and permitted preservatives for shrimps and other shellfish and/or crustaceans are benzoic acid and sorbic acid in combination with acidity regulators, such as citric acid and acetic acid. Other agents have also been proposed, such as lactic acid (lactate) and acetic acid.

The use of preservatives has the drawback that the shellfish and/or crustaceans offered for consumption contain all kinds of agents which adversely affect the natural smell and flavour of the shellfish and/or crustaceans.

In addition, there is a trend in the food industry to limit the use of additives and chemical preservatives as much as possible.

NL2002566 describes a method for preserving shrimps using lactic acid and/or acetic acid. NL2019431 uses a mixture of lactate compounds and acetate compounds for shrimps.

An alternative method for preserving a food product without adding preservatives uses a thermal treatment and modification of the composition of the gas which is present in the packaging of the food product.

With these preservation methods, various kinds of thermal treatments may be used, depending on the heat sensitivity of the food and the susceptibility to decay, as well as the desired stability of the end product. Thermal treatments are selected on the basis of the time/temperature aspects required to render most thermo-resistant pathogenic and adverse microorganisms in a specific food and packaging inactive.

Changing the composition of gas in the packaging of the food product ensures that no oxygen is present in the packaging, so that fungi and other microorganisms cannot develop readily, if at all, as a result of which loss of flavour and smell of the food product can be prevented.

In the prior art, a number of documents are known in which thermal treatments and/or changes in the gaseous compositions in food packaging for shellfish and/or crustaceans are described.

WO2008/094083 describes a method for packaging and preserving food by eliminating the presence of oxygen in the packaged product.

To this end, the packaging is partly filled with a foam containing an oxygen-free gas (such as nitrogen), followed by filling with the food and subsequent supplementation of the packaging with the foam. Thereafter, the packaging is closed and sealed. The packaging is then subjected to a thermal treatment at a temperature of at least 115°C. According to the document, this temperature not only ensures sterilization, but also causes the previously used inert foam to disappear, thus improving the final visual aspect of the product.

EP3628174 discloses a method for producing a packaged shrimp product. To this end, pre-boiled shrimps (of the genus Pandalus) are brought into contact with a preservative solution containing citric acid, sodium benzoate, potassium sorbate, lactic acid, ascorbic acid, malic acid and/or a sodium salt of citric acid. Thereafter, the shrimps are separated from the preservative solution and the shrimps are packaged under an oxygen-free modified atmosphere.

NL2005969 describes how crustaceans are boiled in a sealed packaging, after which inert gas is introduced. The packaging is provided with a ventilation opening which is closed after cooling.

In NL1012495, NL1005991 and EP0440601, a protective atmosphere is used for packaging shellfish or crustaceans.

EP0721743 describes a method for preserving shellfish, in particular mussels, in a packaging by means of an autoclave. The contents of the packaging are vacuum-packed, as a result of which crustaceans, such as shrimps, are pressed together and become damaged, resulting in the shrimps largely losing their natural appearance and texture. In order to achieve a sufficiently long shelf life of the shellfish, the shellfish are heated to 100°C, thus causing the crustaceans to lose their original natural characteristics.

In JPS60-94053 and JPS63-71145, vacuum-packed shellfish and crustaceans, respectively, are heated to temperatures of between 110°C and 140°C, as a result of which the natural flavour, smell, appearance and texture of the shellfish and/or crustaceans are lost. WO 90/03737 A1 discloses a process of cooking, under a gaseous atmosphere (using either N2, or CO2, or He, combined or not), shelled or unshelled foodstuffs, inter alia raw crustacea, shellfish, with a view to prolong preservation in the final fresh or frozen or deep frozen state, wherein the crustacea are stiffened by subjecting them to a temperature of about 0°C for a few minutes.

Although the abovementioned methods are effective, these methods for preserving food are not able to guarantee a sufficiently long shelf life for packaged shellfish and/or crustaceans while preserving the original natural characteristics (organoleptic properties) of the shellfish and/or crustaceans.

The abovementioned methods for packaging shellfish and/or crustaceans have the drawback that they often require preservatives or that they do not preserve the shellfish and/or crustaceans and their natural flavour, smell, appearance and texture sufficiently well.

There is therefore a long-held desire for a method for preserving (peeled and unpeeled) shellfish and/or crustaceans which uses few preservatives, if any, but which does result in a good shelf life in a packaging while preserving the natural characteristics, such as flavour, smell, appearance and texture.

It is therefore an object of the present invention to provide a method for preserving shellfish and/or crustaceans, wherein the packaged final product has a good shelf life, for example at least 10 days, and wherein the packaged shellfish and/or crustacean product preserves its natural smell, flavour, appearance and texture.

These objects are achieved by a method for preserving shellfish and/or crustaceans according to the preamble, wherein heating of the closed/sealed packaging is carried out until the temperature of the shellfish and/or crustaceans at the coldest point in the packaging is in the range from 70 - 80°C, as claimed.

Surprisingly, it has been found that when all shellfish and/or crustaceans in the packaging have reached a temperature of at least 70 - 80°C, and thus the coldest point in the packaging has reached a temperature of 70 - 80°C, the shellfish and/or crustaceans packaged under a protective atmosphere without preservatives are preserved well, while the natural (organoleptic) properties, such as smell, flavour, appearance and texture, are preserved very well.

Heating of the packaging is stopped and cooling of the packaging is started when the temperature of the shellfish and/or crustaceans at the coldest point in the packaging is in the range from 70 - 80°C. It has been found that when all shellfish and/or crustaceans under a protective atmosphere have reached a temperature of 70 - 80°C, the harmful microorganisms are rendered largely inactive and a good shelf life of the shellfish and/or crustaceans in the packaging is achieved, while the natural (organoleptic) properties, such as smell, flavour, appearance and texture of the shellfish and/or crustaceans, are only affected to a very small degree by the very short period at increased temperature.

A temperature sensor is provided in the packaging in the autoclave for measuring the temperature of the shellfish and/or crustaceans at the coldest point in the packaging. In order to be sure that all harmful microorganisms are inactive and a good shelf life is achieved while affecting the natural (organoleptic) properties of the shellfish and/or crustaceans as little as possible, the preservation method is controlled by measuring the temperature in the packaging.

In particular, for the coldest point in the packaging, a zone is chosen in the centre of the packaging defined by the centre of the internal dimensions of the packaging in the length direction, the width direction and height direction. It has been found that by arranging the temperature sensor in the centre of the internal dimensions of the packaging, the preservation method can be controlled in a good and reliable way, both with regard to the shelf life and the natural (organoleptic) properties of the packaged shellfish and/or crustaceans. In other words, the central point of the product in the packaging is chosen as the coldest point in the packaging; often this is the centre of gravity of the product in the packaging with respect to the heat-exchanging surface of the packaging. When this coldest point has reached a temperature of 75 - 80°C, the product has been preserved to the core and will not perish for a long time.

In particular, the shellfish and/or crustaceans are selected from: razor clam (varieties of the genus *Ensis),* shrimp (varieties of the *Caridea* infraorder), pullet carpet shell and Venus clam (varieties of the *Veneridae* family), cockle and prickly cockle (varieties of the *Cardiidae* family).

It has been found that the method according to the invention is suitable for preserving virtually all kinds of shellfish and/or crustaceans while maintaining the quality.

Preferably, the material of the packaging is selected from plastic, metal, glass, or a combination thereof.

In particular, the protective atmosphere contains gasses which are selected from N₂, H₂O, CO₂ or mixtures thereof. Due to the absence of O₂ in the packaging in combination with the heat treatment, an effective preservation of the shellfish and/or crustaceans is achieved.

Preferably, the mixture of gasses for the protective atmosphere comprises a composition which contains between 30% to 90% of N₂, 0% to 50% of H₂O and 0% to 50% of CO₂.

Very good results were obtained with a protective atmosphere consisting substantially of a mixture with a composition of 70% of N₂ and 30% of CO₂.

In particular, the temperature in the autoclave has a value between 80°C and 150°C, preferably the value of the temperature is between 80°C and 100°C.

It has been found that by selecting the temperature in the autoclave to be between 80°C and 150°C, the shellfish and crustacean product in the packaging is effectively preserved, while the organoleptic properties of the product remain unaffected.

### Exemplary embodiment

In the following, the method for packaging boiled unpeeled shrimps is described as an example of the method for preserving shellfish and/or crustaceans. Packaging unpeeled shrimps is known to be problematic because there are many microorganisms present between the shrimp body and its shell and a lot of cross-contamination occurs. The shrimps (variety *Crangon crangon,* also referred to as North Sea shrimp, brown shrimp or common shrimp) are caught at sea by a fishing boat and are immediately boiled and stored on that boat in (airtight) collecting troughs. The shrimps are not cleaned or treated with a preservative. The shrimps are stored on the fishing boat at a temperature of between 0 and 4°C.

The collecting troughs are brought to shore, usually via a fish auction (most boats operate under an obligation to supply to auction), and the shrimps are preserved and packaged in a processing plant/fish auction by means of a processing unit. In contrast to the known prior-art methods, the shrimps are not treated with a preservative.

In the processing unit, the packaging trays are supplied on a conveyor belt, following which the packaging trays are filled with the unpeeled shrimps from the collecting troughs.

Subsequently, a protective atmosphere is applied in and above the tray and the tray is closed and sealed in an airtight manner. The composition of the gas of the protective atmosphere is preferably approximately 70% of N₂ and 30% of CO₂. The temperature during this processing step is room temperature or a lower temperature, such as a temperature between 0°C and 15°C. The pressure during packaging of the shrimps and closing of the packaging may be atmospheric pressure, although it is also possible to apply a slight overpressure or negative pressure when applying the protective atmosphere. Preferably, no vacuum is applied to the packaging, because this could press the shrimps together and damage and/or deform them and they could lose their natural appearance.

Thereafter, a batch/charge of the closed filled packagings is introduced into an autoclave, where the packagings are subjected to a thermal treatment. The autoclave is closed and the pressure is increased to, for example, 0.4 - 1.5 bar(g) (bar gauge or bar overpressure compared to ambient pressure). One or more packagings are provided with temperature sensors, so that the temperature in the interior of the packaging (the coldest point) of the packet of unpeeled shrimps can be monitored. In the autoclave, the packagings are now heated for approximately 8 - 10 minutes by means of a heating medium, such as for example steam at 125°C, until the temperature at the coldest point in the packaging of unpeeled shrimps has reached a value of 75°C. When this temperature is reached, the supply of heat (steam) in the autoclave is stopped immediately and the autoclave is cooled in order to return the packagings with shrimps to, for example, 20°C as quickly as possible. The pressure in the autoclave gradually drops (together with the temperature) until it reaches ambient pressure, following which the packagings are removed from the autoclave. The packaging containing the temperature sensor is removed from the batch/charge of packagings.

Further cooling of the packagings with shrimps takes place in, for example, a cold store.

Preferably, some packagings per batch/charge of packagings in the autoclave are monitored and analysed over time, inter alia for the bacteria count and smell, flavour and texture.

Instead of a steam circuit, the autoclave may also be provided with a cascade water circuit by means of which heated water is sprayed over the packagings. The temperature of the water is varied depending on the duration of the thermal treatment.

### Results of measurements on unpeeled shrimps

The shrimps have not been treated with a preservative.

Microbiological tests were performed with regard to standard count of Listeria monocytogenes, Salmonella, total anaerobic bacteria count, total aerobic bacteria count. In addition, the peelability of the unpeeled shrimps was also assessed.

Five packagings thermally treated by the method according to the invention were stored at room temperature and sampled: immediately after packaging, after 10 days at the end of the best before date (BBD), after 12 days (2 days after the best before date), and after 15 days (5 days after the best before date), and the results were compared to the standard.

| | | |
|---|---|---|
| Immediately after packaging | Treated | Standard |
| *Listeria monocytogenes* (cfu/g) | absent | absent |
| *Salmonella* | absent | absent |
| After10 days (best before date) | Treated | Standard |
| *Listeria monocytogenes* (cfu/g) | < 100 | <=100 |
| *Salmonella* | absent | absent |
| Total anaerobic bacteria count | 10 | - |
| Total aerobic bacteria count | 200 | - |
| After12 days (best before date +2) | Treated | Standard |
| *Listeria monocytogenes* (cfu/g) | < 100 | <=100 |
| *Salmonella* | absent | absent |
| After 15 days (best before date +5) | Treated | Standard |
| *Listeria monocytogenes* (cfu/g) | < 100 | <=100 |
| *Salmonella* | absent | absent |

In addition, five packagings without thermal treatment and five packagings with thermal treatment were also stored and sampled regularly; as was the initial product just before and just after packaging.

| Sample time | Bacteria count | | Peelability | |
|---|---|---|---|---|
| | untreated | treated | untreated | treated |
| Initial product | 24,000 | 24,000 | good | good |
| After packaging | 24,000 | 0 | good | good |
| Day 4 | 672,000 | 0 | reasonably good | good |
| Day 6 | 789,000 | 0 | reasonably good | good |
| Day 7 | 465,000 | 0 | reasonably good | good |
| Day 8 | 670,000 | 0 | reasonably good | good |
| Day 9 | >1,000,000 | 1,000 | not good | good |
| Day 10 (best before date) | >1,000,000 | 3,000 | not good | good |

The unpeeled shrimps in the packagings treated by the method according to the invention have a significantly lower bacteria count after 10 days than the shrimps in the untreated packagings. The peelability of the shrimps in the treated packagings remains good, even after 10 days, despite the fact that the bacteria count increases slightly.

After 10 days, at the end of the best before date, the thermally treated unpeeled shrimps without preservative have preserved the typical smell and structure (organoleptic properties) of freshly caught shrimps and are free from unnatural, undesirable smells.

## Claims

1. Method for preserving boiled shellfish and/or crustaceans in a packaging, comprising the following steps:
- packaging the boiled shellfish and/or crustaceans in a packaging under a protective atmosphere;
- closing/sealing the packaging;
- heating the closed/sealed packaging containing the boiled shellfish and/or crustaceans,
- wherein heating of the packaging is carried out in an autoclave, by means of steam or heated water,
- wherein heating of the closed/sealed packaging is carried out at an overpressure in the range from 0.1 - 3.0 bar(g);
**characterized in that**
a temperature sensor is provided in the packaging in the autoclave for measuring the temperature of the boiled shellfish and/or crustaceans at the coldest point in the packaging; the method further comprising the steps:
- heating of the closed/sealed packaging until the temperature of the boiled shellfish and/or crustaceans at the coldest point in the packaging has reached a temperature in the range from 70 - 80°C;
- stopping heating and starting cooling of the packaging.

2. Method according to Claim 1, wherein the boiled shellfish and/or crustaceans are selected from: razor clam (varieties of the genus *Ensis),* shrimp (varieties of the *Caridea* infraorder), pullet carpet shell and Venus clam (varieties of the *Veneridae* family), cockle and prickly cockle (varieties of the *Cardiidae* family).

3. Method according to Claim 1 - 2, wherein the material of the packaging is selected from plastic, metal, glass, or a combination thereof.

4. Method according to Claim 1 - 3, wherein the protective atmosphere contains gasses which are selected from N₂, H₂O, CO₂ or mixtures thereof.

5. Method according to Claim 4, wherein the mixture of gasses for the protective atmosphere comprises a composition which contains between 30% to 90% of N₂, 0% to 50% of H₂O and 0% to 50% of CO₂, preferably the mixture of gasses for the protective atmosphere comprises a composition of 70% of N₂ and 30% of CO₂.

6. Method according to Claim 1 - 5, wherein the temperature in the autoclave has a value between 80°C and 150°C, preferably the value of the temperature is between 80°C and 100°C.

## Patentansprüche

1. Verfahren zur Konservierung gekochter Schalen- und/oder Krustentiere in einer Verpackung, umfassend die folgenden Schritte:
- Verpacken der gekochten Schalen- und/oder Krustentiere in einer Verpackung unter einer Schutzatmosphäre;
- Verschließen/Abdichten der Verpackung;
- Erhitzen der geschlossenen/abgedichteten Verpackung, die die gekochten Schalen- und/oder Krustentiere enthält;
- wobei Erhitzen der Verpackung in einem Autoklaven mithilfe von Dampf oder erhitztem Wasser durchgeführt wird;
- wobei Erhitzen der geschlossenen/abgedichteten Verpackung bei einem Überdruck in dem Bereich von 0,1 - 3,0 bar(g) durchgeführt wird;
**dadurch gekennzeichnet, dass**
in der Verpackung in dem Autoklaven ein Temperatursensor zur Messung der Temperatur der gekochten Schalen- und/oder Krustentiere an der kältesten Stelle in der Verpackung bereitgestellt ist; wobei das Verfahren ferner die Schritte umfasst:
- Erhitzen der geschlossenen/abgedichteten Verpackung, bis die Temperatur der gekochten Schalen- und/oder Krustentiere an der kältesten Stelle in der Verpackung eine Temperatur in dem Bereich von 70 - 80 °C erreicht hat;
- Beenden des Heizens und Beginnen des Kühlens der Verpackung.

2. Verfahren nach Anspruch 1, wobei die gekochten Schalen- und/oder Krustentiere ausgewählt sind aus: Schwertmuscheln (Varietäten der Gattung *Ensis),* Krabben (Varietäten der Teilordnung *Caridea),* Teppichmuscheln und Venusmuscheln (Varietäten der Familie *Veneridae),* Herzmuscheln und stacheligen Herzmuscheln (Varietäten der Familie *Cardiidae).*

3. Verfahren nach Anspruch 1 - 2, wobei das Material der Verpackung ausgewählt ist aus Kunststoff, Metall, Glas oder einer Kombination davon.

4. Verfahren nach Anspruch 1 - 3, wobei die Schutzatmosphäre Gase enthält, die ausgewählt sind aus N₂, H₂O, CO₂ und Gemischen davon.

5. Verfahren nach Anspruch 4, wobei das Gasgemisch für die Schutzatmosphäre eine Zusammensetzung aufweist, die zwischen 30 % und 90 % N₂, 0 % und 50 % H₂O und 0 % und 50 % CO₂ enthält, wobei das Gasgemisch für die Schutzatmosphäre vorzugsweise eine Zusammensetzung von 70 % N₂ und 30 % CO₂ aufweist.

6. Verfahren nach Anspruch 1 - 5, wobei die Temperatur in dem Autoklaven einen Wert zwischen 80 °C und 150 °C aufweist, wobei der Wert der Temperatur vorzugsweise zwischen 80 °C und 100 °C beträgt.

## Revendications

1. Procédé de conservation de coquillages et/ou de crustacés bouillis dans un emballage, comprenant les étapes suivantes :
- le conditionnement des coquillages et/ou des crustacés bouillis dans un emballage sous atmosphère protectrice ;
- la fermeture/le scellement de l'emballage ;
- le chauffage de l'emballage fermé/scellé contenant les coquillages et/ou les crustacés bouillis,
- dans lequel le chauffage de l'emballage est effectué dans un autoclave, par de la vapeur ou de l'eau chauffée,
- dans lequel le chauffage de l'emballage fermé/scellé est effectué à une surpression dans la plage allant de 0,1 à 3,0 bar(g) ;
**caractérisé en ce que**
un capteur de température est prévu dans l'emballage dans l'autoclave pour mesurer la température des coquillages et/ou des crustacés bouillis au point le plus froid dans l'emballage ; le procédé comprenant en outre les étapes :
- le chauffage de l'emballage fermé/scellé jusqu'à ce que la température des coquillages et/ou des crustacés bouillis au point le plus froid dans l'emballage ait atteint une température dans la plage allant de 70 à 80°C ;
- l'arrêt du chauffage et le démarrage du refroidissement de l'emballage.

2. Procédé selon la revendication 1, dans lequel les coquillages et/ou les crustacés bouillis sont choisis parmi : le couteau (variétés du genre *Ensis),* la crevette (variétés de l'infra-ordre *Caridea),* la palourde bleue et la palourde de Vénus (variétés de la famille *Veneridae*), la coque et la coque épineuse (variétés de la famille *Cardiidae*).

3. Procédé selon l'une des revendications 1 et 2, dans lequel le matériau de l'emballage est choisi parmi le plastique, le métal, le verre ou une combinaison de ceux-ci.

4. Procédé selon l'une des revendications 1 à 3, dans lequel l'atmosphère protectrice contient des gaz qui sont choisis parmi N₂, H₂O, CO₂ ou des mélanges de ceux-ci.

5. Procédé selon la revendication 4, dans lequel le mélange de gaz pour l'atmosphère protectrice comprend une composition qui contient 30% à 90% de N₂, 0% à 50% de H₂O et 0% à 50% de CO₂, de préférence le mélange de gaz pour l'atmosphère protectrice comprend une composition de 70% de N₂ et 30% de CO₂.

6. Procédé selon l'une des revendications 1 à 5, dans lequel la température dans l'autoclave a une valeur comprise entre 80°C et 150°C, de préférence la valeur de la température est comprise entre 80°C et 100°C.
